Europäisches Patentamt

European Patent Office

Office européen des brevets

(11) Veröffentlichungsnummer: **0 492 714 A1**

## (12) EUROPÄISCHE PATENTANMELDUNG

(21) Anmeldenummer: **91203324.8**

(22) Anmeldetag: **17.12.91**

(51) Int. Cl.⁵: **G01N 31/16, G01N 27/42**

(30) Priorität: **20.12.90 DE 4040924**

(43) Veröffentlichungstag der Anmeldung:
**01.07.92 Patentblatt 92/27**

(84) Benannte Vertragsstaaten:
**AT BE CH DE ES FR GB LI NL SE**

(71) Anmelder: **METALLGESELLSCHAFT
Aktiengesellschaft
Reuterweg 14
W-6000 Frankfurt am Main(DE)**

(72) Erfinder: **Hauffe, Dieter
Wilhelm-Busch-Strasse 60
W-6000 Frankfurt am Main 50(DE)**

(54) **Nitritbestimmung in Phosphatierungslösungen.**

(57) Bei der Bestimmung von Nitrit in wässrigen Phosphatierungslösungen, die einfaches und/oder komplexes Fluorid enthalten, wird in der Weise verfahren, daß man eine Badprobe mit Schwefelsäure, Salpetersäure und/oder Perchlorsäure ansäuert und in Gegenwart eines mindestens fünffachen, auf den Fluoridgehalt des Phosphatierungsbades bezogenen, molaren Überschusses an Aluminiumionen unter elektrischer Indikation mit Hilfe einer Redoxelektrode nach der Cer(IV)-Sulfat-Methode titriert.

Vorzugsweise säuert man die Badprobe mit Schwefelsäure an und bringt die Aluminiumionen als Aluminiumsulfat-18-Hydrat ein.

Die Bestimmungmethode ist mit Vorteil auf die Steuerung von Dosierorganen für die Zufuhr von nitrithaltigem Ergänzungskonzentrat zu Phosphatierungslösungen anwendbar.

EP 0 492 714 A1

Die Erfindung betrifft ein Verfahren zur Bestimmung von Nitrit in wässrigen Phosphatierungslösungen, die einfaches und/oder komplexes Fluorid enthalten sowie dessen Anwendung auf die Steuerung von Dosierorganen für die Zufuhr von nitrithaltigem Ergänzungskonzentrat zu Phosphatierungslösungen.

Bei der chemischen Oberflächenbehandlung von Stahl und anderen Metallen mit nitritbeschleunigten Phosphatierungslösungen kommt der analytischen Bestimmung des Nitritgehaltes eine besondere Bedeutung zu, da die Aufrechterhaltung dieser Badkomponente innerhalb enger Konzentrationsgrenzen ausschlaggebend für die Qualität der erzeugten Phosphatschichten ist.

Es ist bekannt, in einer Badprobe die Nitritmenge mit Cer(IV)-Sulfat-Maßlösung unter elektrischer Indikation mittels einer in die Badprobe eintauchenden Redoxelektrode zu titrieren. Bei einer anderen Ausführungsform der Methode läßt man das Nitrit in der Badprobe mit einem Überschuß der Cer(IV)-Sulfat-Maßlösung reagieren und titriert das nicht verbrauchte Cer(IV)-Sulfac mit Eisen(II)-Sulfat-Maßlösung zurück, wobei der Endpunkt durch den Potentialwendepunkt einer in die Badprobe eintauchenden Redoxelektrode angezeigt wird (W. Rausch "Die Phosphatierung von Metallen", Eugen L. Leuze Verlag, Saulgau/Württ. 2. Auflage 1988, Seite 310).

Das vorgenannte Titrationsverfahren arbeitet dann einwandfrei, wenn die analysierten Phosphatierungslösungen frei von einfachen und/oder komplexen Fluoriden sind. In Gegenwart von Fluoriden sind jedoch die ermittelten Analysenwerte derart fehlerhaft, daß die Bestimmungsmethode völlig unbrauchbar ist.

Nun zeigt die Entwicklung, daß in zunehmendem Maße zur Optimierung der Phosphatschichtbildung Phosphatierbäder zum Einsatz gelangen, die einfache und/oder komplexe Fluoride enthalten. Außerdem ist es im Hinblick auf die zunehmende Automatisierung des Phosphatierprozesses wünschenswert, neben der Bestimmung anderer wichtiger Badkomponenten auch die des Nitrits mit Titrationsautomaten durchführen zu können.

Aufgabe der Erfindung ist es daher, ein Verfahren zur Bestimmung von Nitrit in wässrigen, sauren Phosphatierungslösungen bereitzustellen, das in Gegenwart von einfachem und/oder komplexem Fluorid einwandfrei arbeitet und auch in soweit eine Automatisierung des Phosphatierungsprozesses erlaubt.

Die Aufgabe wird gelöst, indem das Verfahren der eingangs genannten Art entsprechend der Erfindung derart ausgestaltet wird, daß man eine Badprobe der Phosphatierungslösung mit Schwefelsäure, Salpetersäure und/oder Perchlorsäure ansäuert und in Gegenwart eines mindestens fünffachen, auf den Fluoridgehalt der Phosphatierungslösung bezogenen, molaren Überschusses an Aluminiumionen unter elektrischer Indikation mit Hilfe einer Redoxelektrode nach der Cer(IV)-Sulfat-Methode titriert.

Die Säurezugabe ist in der Weise zu bemessen, daß bei der nachfolgenden Titration eine Ausfällung von Cer-Phosphat unterbleibt. Hierzu genügt in der Regel, bei der Titration einer Badprobe von 10 ml und einer Verdünnung dieser Badprobe mit ca. 70 ml vollentsalztem Wasser eine Säuremenge von ca. 1 bis 5 g - gerechnet als konzentrierte Schwefelsäure.

Der mindestens fünffache, auf den Fluoridgehalt der Phosphatierungslösung bezogene molare Überschuß an Aluminiumionen ist erforderlich, um Fehler im Analysenergebnis zu vermeiden. Eine Mengenbegrenzung nach oben ist nicht kritisch. Im allgemeinen wird jedoch ein 30-facher molarer Überschuß nicht überschritten. Auf eine übliche Phosphatierunglösung bezogen beträgt die Zugabe an Aluminiumionen etwa 8 bis 40 g/l Phosphatierungslösung bzw. 80 bis 400 mg bei Titration einer Badprobe von 10 ml.

Die Titration der Badprobe wird zweckmäßigerweise nach deren Verdünnung mit vollentsalztem Wasser auf etwa das fünf- bis zehnfache vorgenommen. Sie kann in der Weise erfolgen, daß mit der Cer(IV)-Sulfat-Maßlösung unter elektrischer Indikation bis zum Erreichen des Potentialwendepunktes oder des Potentialsprunges titriert wird. Es kann der Badprobe jedoch auch ein definierter Überschuß an Cer(IV)-Sulfatlösung zugegeben und beispielsweise mit Eisen(II)-Sulfat-Maßlösung bis zum Erreichen des Potentialsprunges zurücktitriert werden. Die durch direkte Titration verbrauchte oder aus der Volumendifferenz von vorgelegter Cer(IV)-Sulfatlösung und verbrauchter Eisen(II)-Sulfatlösung ermittelte Menge Cer(IV)-Sulfat-Maßlösung ist ein Maß für die in der Badprobe enthaltene Nitritmenge. 1 ml 0,01-molarer Cer(IV)-Sulfat-Maßlösung entspricht 0,23 mg Nitrit. Bei Titration einer 10-ml-Badprobe entspricht der Verbrauch von 1 ml Cer(IV)-Sulfatlösung auf 1 l Phosphatierungslösung hochgerechnet 23 mg Nitrit.

Eine bevorzugte Ausgestaltung der Erfindung sieht vor, zum Ansäuern der Badprobe Schwefelsäure zu verwenden.

Gemäß eine weitere vorteilhaften Ausführungsform der Erfindung werden die erforderlichen Aluminiumionen zweckmäßigerweise als $Al_2(SO_4)_3 \cdot 18H_2O$ der Badprobe zugegeben. Auf die o.g. Angaben für die Bemessung der Zugabemenge für Aluminiumionen pro 10 ml Badprobe bezogen sind ca. 1 bis 5 g dieses Aluminiumsulfats erforderlich.

Es ist besonderes zweckmäßig, zur Durchführung der Titration eine Platinelektrode als Redoxelektrode mit einer gesättigten Kalomelelektrode als Bezugssystem zu verwenden.

Das erfindungsgemäße Verfahren der Nitritbestimmung läßt sich automatisch durchführen und gestattet daher - in vorteilhafter Ausgestaltung der Erfindung - seine Anwendung zur Steuerung von Dosierorganen für die Zufuhr von nitrithaltigem Ergänzungskonzentrat zur Phosphatierungslösung.

Das Verfahren ist universell, d.h. für alle Nitrit und Fluorid enthaltenden Phosphatierungslösungen ensetzbar.

Die Erfindung wird im Folgenden beispielsweise und näher erläutert.

BEISPIEL

Es wurde eine Phosphatierungslösung angesetzt, die neben den Badkomponenten Zink, Mangan, Nickel, Natrium und Phosphat
0,8 g/l einfaches Fluorid und
0,6 g/l Hexafluorosilikat
enthielt. Außerdem wurden der Phosphatierungslösung 69 mg/l Natriumnitrit entsprechend 46 mg/l Nitrit zugesetzt.

Eine 10-ml-Probe dieses Bades wurde mit 70 ml vollentsalztem Wasser verdünnt und mit 2 g Aluminiumsulfat-18-Hydrat, 10 ml 20%-iger Schwefelsäure und 5 ml 0,01-molarer Cer(IV)-Sulfatlösung versetzt. Danach wurde mit 0,01-molarer Eisen(II)-Sulfatlösung titriert, wobei das Potential einer eingetauchten Platin/Kalomel-Einstabmeßkette laufend von einem Meßgerät mit Schreiber registriert wurde. Die bis um Erreichen des Potentialwendepunkts benötigte Menge an 0,01-molarer Eisen(II)-Sulfatlösung betrug 3,0 ml. Hieraus ergibt sich ein durch den Nitritgehalt der Phosphatierungslösung bedingter Verbrauch an 0,01-molarer Cer(IV)-Sulfatlösung von 2 ml, entsprechend einem Nitritgehalt von 46 mg/l Phosphatierungslösung; d.h. durch die Titration wurde die zugesetzte Nitritmenge exakt bestimmt.

In einem Vergleichsversuch wurde bei sonst gleicher Arbeitsweise die Zugabe von Aluminiumsulfat unterlassen. Bei der Rücktitration der überschüssig zugesetzten Cer(IV)-Sulfatlösung wurden 4,6 ml Eisen(II)-Sulfatlösung benötigt, was einem durch den Nitritgehalt bedingten Verbrauch von 0,4 ml Cer(IV)-Sulfatlösung entsprach. Die ermittelte Nitritkonzentration von 9 mg/l Phosphatierungslösung war mithin extrem fehlerhaft.

**Patentansprüche**

1.  Verfahren zur Bestimmung von Nitrit in wässrigen Phosphatierungslösungen, die einfaches und/oder komplexes Fluorid enthalten, dadurch gekennzeichnet, daß man eine Badprobe mit Schwefelsäure, Salpetersäure und/oder Perchlorsäure ansäuert und in Gegenwart eines mindestens fünffachen, auf den Fluoridgehalt des Phosphatierungsbades bezogenen, molaren Überschusses an Aluminiumionen unter elektrischer Indikation mit Hilfe einer Redoxelektrode nach der Cer(IV)-Sulfat-Methode titriert.

2.  Verfahren nach Anspruch 1, dadurch gekennzeichnet, daß man die Badprobe mit Schwefelsäure ansäuert.

3.  Verfahren nach Anspruch 1 oder 2, dadurch gekennzeichnet, daS man die Aluminiumionen als Aluminiumsulfat-18-Hydrat einbringt.

4.  Anwendung des Verfahrens nach einem oder mehreren der Ansprüche 1, 2 oder 3 auf die Steuerung von Dosierorganen für die Zufuhr von nitrithaltigem Ergänzungskonzentrat zu Phosphatierungslösungen.

| | EINSCHLÄGIGE DOKUMENTE | | EP 91203324.8 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| D,A | DIE PHOSPHATIERUNG VON METALLEN, 2. Auflage, 1988, Eugen G. LEUZE Verlag, Saulgau, W. RAUSCH "Analytische Kontrolle der Phosphatier-chemikalien" Kapitel 8, Seiten 310-312 * Seite 310, Zeile 10 von unten - Seite 311, Zeile 23 von unten * ---- | 1,4 | G 01 N 31/16 G 01 N 27/42 |

**RECHERCHIERTE SACHGEBIETE (Int Cl⁵)**

G 01 N

Der vorliegende Recherchenbericht wurde für alle Patentansprüche erstellt.

| Recherchenort | Abschlußdatum der Recherche | Prüfer |
|---|---|---|
| WIEN | 15-04-1992 | SCHNASS |